# EUROPÄISCHE PATENTSCHRIFT

(11) **EP 2 104 791 B1**
(45) Veröffentlichungstag und Bekanntmachung des Hinweises auf die Patenterteilung: **29.06.2011**
(21) Anmeldenummer: 07847917.7
(22) Anmeldetag: 06.12.2007
(51) Int. Cl.: F16H 3/66

(54) **MEHRSTUFENGETRIEBE**
MULTI-STAGE GEARBOX
TRANSMISSION À PLUSIEURS RAPPORTS

(30) Priorität: 19.12.2006 DE 102006059907
(43) Veröffentlichungstag der Anmeldung: 30.09.2009
(73) Patentinhaber: ZF Friedrichshafen AG, 88038 Friedrichshafen (DE)
(72) Erfinder: BOSS, Ralf, 88079 Kressbronn (DE); GUMPOLTSBERGER, Gerhard, 88045 Friedrichshafen (DE); FREUDENREICH, Hans-Peter, 89608 Griesingen (DE)
(86) Internationale Anmeldenummer: PCT/EP2007/063444
(87) Internationale Veröffentlichungsnummer: WO 2008/074647

(56) Entgegenhaltungen:
- WO-A-02/079669
- DE-A1- 2 936 969
- DE-A1- 3 123 868
- DE-A1- 19 949 507
- GB-A- 2 177 764
- US-A1- 2006 166 779

## Beschreibung

Die vorliegende Erfindung betrifft ein Mehrstufengetriebe in Planetenbauweise, insbesondere ein Automatgetriebe für ein Kraftfahrzeug, gemäß dem Oberbegriff des Patentanspruchs 1.

Automatgetriebe, insbesondere für Kraftfahrzeuge, umfassen nach dem Stand der Technik Planetensätze, die mittels Reibungs- bzw. Schaltelementen, wie etwa Kupplungen und Bremsen, geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler oder einer Strömungskupplung, verbunden sind.

Ein derartiges Getriebe geht aus der EP 0 434 525 A1 hervor. Es umfasst im Wesentlichen eine Antriebswelle und eine Abtriebswelle, die parallel zueinander angeordnet sind, einen konzentrisch zur Abtriebswelle angeordneten Doppelplanetenradsatz und fünf Schaltelemente in der Form von drei Kupplungen und zwei Bremsen, deren wahlweise Sperrung jeweils paarweise die verschiedenen Gangübersetzungen zwischen der Antriebswelle und der Abtriebswelle bestimmt. Hierbei weist das Getriebe einen Vorschaltradsatz und zwei Leistungswege auf, so dass durch das selektive paarweise Eingreifen der fünf Schaltelemente sechs Vorwärtsgänge erzielt werden.

Hierbei werden bei dem ersten Leistungsweg zwei Kupplungen zur Übertragung des Drehmomentes vom Vorschaltradsatz zu zwei Elementen des Doppelplanetenradsatzes benötigt. Diese sind in Kraftflussrichtung im Wesentlichen hinter dem Vorschaltradsatz in Richtung Doppelplanetenradsatz angeordnet. Bei dem zweiten Leistungsweg ist eine weitere Kupplung vorgesehen, die diesen mit einem weiteren Element des Doppelplanetenradsatzes lösbar verbindet. Hierbei sind die Kupplungen derart angeordnet, dass der Innenlamellenträger den Abtrieb bildet.

Des weiteren ist aus der Druckschrift US 6,139,463 ein kompaktes Mehrstufengetriebe in Planetenbauweise, insbesondere für ein Kraftfahrzeug bekannt, welches zwei Planetenradsätze und einen Vorschaltradsatz sowie drei Kupplungen und zwei Bremsen aufweist. Bei diesem bekannten Mehrstufengetriebe sind bei einem ersten Leistungsweg zwei Kupplungen C-1 und C-3 zum Übertragen des Drehmoments vom Vorschaltradsatz zu den beiden Planetenradsätzen vorgesehen. Hierbei ist der Außenlamellenträger bzw. die Zylinder- bzw. Kolben- und Druckausgleichsseite der Kupplung C-3 mit einer ersten Bremse B-1 verbunden. Zudem ist der Innenlamellenträger der dritten Kupplung C-3 mit der Zylinder- bzw. Kolben- und Druckausgleichsseite der ersten Kupplung C-1 verbunden, wobei der Innenlamellenträger der ersten Kupplung C-1 abtriebsseitig angeordnet ist und mit einem Sonnenrad des dritten Planetenradsatzes verbunden ist.

Des weiteren ist aus der DE 199 49 507 A1 der Anmelderin ein Mehrstufengetriebe bekannt, bei dem an der Antriebswelle zwei nicht schaltbare Vorschaltradsätze vorgesehen sind, die ausgangsseitig zwei Drehzahlen erzeugen, die neben der Drehzahl der Antriebswelle wahlweise auf einen auf die Abtriebswelle wirkenden, schaltbaren Doppelplanetenradsatz durch selektives Schließen der verwendeten Schaltelemente derart schaltbar sind, dass zum Umschalten von einem Gang in den jeweils nächstfolgenden höheren oder niedrigeren Gang von den beiden gerade betätigten Schaltelementen jeweils nur ein Schaltelement zu- oder abgeschaltet werden muss.

Aus der DE 199 12 480 A1 ist ein automatisch schaltbares Kraftfahrzeuggetriebe mit drei Einsteg-Planetensätzen sowie drei Bremsen und zwei Kupplungen zum Schalten von sechs Vorwärtsgängen und einem Rückwärtsgang und mit einer Antriebs- sowie einer Abtriebswelle bekannt. Das automatisch schaltbare Kraftfahrzeuggetriebe ist derart ausgebildet, dass die Antriebswelle direkt mit dem Sonnenrad des zweiten Planetensatzes verbunden ist und dass die Antriebswelle über die erste Kupplung mit dem Sonnenrad des ersten Planetensatzes und/oder über die zweite Kupplung mit dem Steg des ersten Planetensatzes verbindbar ist. Zusätzlich oder alternativ ist das Sonnenrad des ersten Planetensatzes über die erste Bremse mit dem Gehäuse des Getriebes und/oder der Steg des ersten Planetensatzes über die zweite Bremse mit dem Gehäuse und/oder dem Sonnenrad des dritten Planetensatzes über die dritte Bremse mit dem Gehäuse verbindbar.

Des weiteren ist aus der DE 102 13 820 A1 ein Mehrgangautomatikgetriebe bekannt, umfassend einen ersten Eingangspfad T1 eines ersten Übersetzungsverhältnisses; einen Eingangspfad T2, der ein größeres Übersetzungsverhältnis als dieser Eingangspfad T1 hat; einen Planetenradsatz mit vier Elementen, wobei die vier Elemente ein erstes Element, ein zweites Element, ein drittes Element und ein viertes Element in der Reihenfolge der Elemente in einem Drehzahldiagramm sind; eine Kupplung C-2, die eine Drehung des Eingangspfads T2 auf das erste Element S3 überträgt; eine Kupplung C-1, die die Drehung von dem Eingangspfad T2 auf das vierte Element S2 überträgt; eine Kupplung C-4, die eine Drehung von dem Eingangspfad T1 auf das erste Element überträgt; eine Kupplung C-3, die die Drehung von dem Eingangspfad T1 auf das zweite Element C3 überträgt; eine Bremse B-1, die den Eingriff des vierten Elements herstellt; eine Bremse B-2, die den Eingriff des zweiten Elements herstellt; und ein Abtriebselement, das mit dem dritten Element R3 gekoppelt ist.

Im Rahmen der DE 101 15 983 A1 der Anmelderin wird ein Mehrstufengetriebe beschrieben, mit einer Antriebswelle, die mit einem Vorschaltsatz verbunden ist, mit einer Abtriebswelle, die mit einem Nachschaltsatz verbunden ist, und mit maximal sieben Schaltelementen, durch deren wahlweises Schalten mindestens sieben Vorwärtsgänge ohne Gruppenschaltung schaltbar sind. Der Vorschaltsatz wird aus einem Vorschalt-Planetenradsatz oder maximal zwei nicht schaltbaren, mit dem ersten Vorschalt-Planetenradsatz gekoppelten Vorschalt-Planetenradsätzen gebildet, wobei der Nachschaltsatz als Zweisteg-Vierwellen-Getriebe mit zwei schaltbaren Nachschalt-Planetenradsätzen ausgebildet ist und vier freie Wellen aufweist. Die erste freie Welle dieses Zweisteg-Vierwellen-Getriebes ist mit dem ersten Schaltelement verbunden, die zweite freie Welle mit dem zweiten und dritten Schaltelement, die dritte freie Welle mit dem vierten und fünften Schaltelement und die vierte freie Welle ist mit der Abtriebswelle verbunden. Für ein Mehrstufengetriebe mit insgesamt sechs Schaltelementen wird erfindungsgemäß vorgeschlagen, die dritte freie Welle oder die erste freie Welle des Nachschaltsatzes zusätzlich mit einem sechsten Schaltelement zu verbinden. Für ein Mehrstufengetriebe mit insgesamt sieben Schaltelementen wird erfindungsgemäß vorgeschlagen, die dritte freie Welle zusätzlich mit einem sechsten Schaltelement D' und die erste freie Welle zusätzlich mit einem siebten Schaltelement zu verbinden.

Ferner ist im Rahmen der DE 101 15 987 der Anmelderin ein Mehrstufengetriebe mit mindestens sieben Gängen beschrieben. Dieses Getriebe besteht neben der Antriebswelle und der Abtriebswelle aus einem nicht schaltbaren Vorschaltradsatz und einem schaltbaren Nachschaltradsatz in Form eines Zweisteg-Vierwellen-Getriebes. Der Vorschaltradsatz besteht aus einem ersten Planetenradsatz, welcher neben der Eingangsdrehzahl der Antriebswelle eine zweite Drehzahl anbietet, die wahlweise auf einen Nachschaltradsatz geschaltet werden kann. Der Nachschaltradsatz besteht aus zwei schaltbaren Planetenradsätzen, welche mit den sechs Schaltelementen mindestens sieben Gänge schalten kann, wobei zwei Leistungswege gebildet werden. Dabei werden bei jedem Schaltvorgang in vorteilhafter Weise stets Gruppenschaltungen vermieden. Ein 9-Gang-Mehrstufengetriebe ist ferner aus der DE 29 36 969 bekannt; es umfasst acht Schaltelemente und vier Radsätze.

Automatisch schaltbare Fahrzeuggetriebe in Planetenbauweise im Allgemeinen sind im Stand der Technik bereits vielfach beschrieben und unterliegen einer permanenten Weiterentwicklung und Verbesserung. So sollen diese Getriebe einen geringen Bauaufwand, insbesondere eine geringe Anzahl an Schaltelementen erfordern und bei sequentieller Schaltweise Doppelschaltungen vermeiden, so dass bei Schaltungen in definierten Ganggruppen jeweils nur ein Schaltelement gewechselt wird.

Bisherige Planetengetriebe weisen in der Regel nur einen Rückwärtsgang auf, wobei auch Planetengetriebe bekannt sind, die zusätzliche Rückwärtsgänge aufweisen, die entweder mit den vorhandenen Schaltelementen im Planetengetriebe schaltbar sind oder mittels eines zusätzlichen Wendesatzes realisiert werden. Nachteilig bei den bekannten Planetengetrieben ist demnach entweder die nicht ausreichende Anzahl und ungenügende Übersetzung der Rückwärtsgänge oder der zur Realisierung der Rückwärtsgänge erforderliche Bauaufwand.

Die DE 3123868 A1 offenbart ein Mehrstufengetriebe in Planetenbauweise, umfassend einen Antrieb und einen Abtrieb, welche in einem Gehäuse angeordnet sind, vier Planetensätze, sieben drehbare Wellen sowie mindestens sechs Schaltelemente, umfassend Bremsen und Kupplungen, deren selektives Eingreifen verschiedene Übersetzungsverhaltnisse zwischen dem Antrieb und dem Abtrieb bewirkt, so dass sechs Vorwartsgänge und drei Rückwärtsgänge realisierbar sind, wobei eine erste Welle ständig mit dem Antrieb verbunden ist, eine zweite Welle ständig mit dem Abtrieb verbunden ist, eine fünfte Welle ständig mit dem Hohlrad des vierten Planetensatzes verbunden ist, eine siebte Welle ständig mit dem Sonnenrad des dritten Planetensatzes verbunden ist und eine achte Welle ständig mit dem Steg des zweiten Planetensatzes verbunden ist. Allerdings sind die damit erreichbaren Übersetzungen und Stufensprünge zwischen den einzelnen Gangstufen, sowie der Wirkungsgrad des Getriebes für bestimmte Anwendungen nicht ausreichend bzw. nicht vorteilhaft.

Ausgehend vom genannten Getriebe aus der DE 3123868 A1 liegt der vorliegenden Erfindung die Aufgabe zugrunde, ein Mehrstufengetriebe der eingangs genannten Art vorzuschlagen, welches mindestens sechs Vorwärtsgänge und mindestens drei Rückwärtsgänge mit ausreichender Übersetzung aufweist, bei dem der Bauaufwand und die Baugröße bzw. das Gewicht optimiert werden und zudem der Wirkungsgrad hinsichtlich der Schlepp- und Verzahnungsverluste verbessert wird. Zudem sollen bei dem erfindungsgemäßen Mehrstufengetriebe geringe Momente auf die Schaltelemente und Planetensätze wirken, sowie die Drehzahlen der Wellen, Schaltelemente und Planetensätze möglicht gering gehalten werden. Insbesondere soll das erfindungsgemäße Getriebe zum Einbau in Nutzfahrzeugen und Arbeitsmaschinen geeignet sein, um sowohl eine ausreichende Vorwärtsgangzugkraft und -geschwindigkeit, als auch eine ausreichende Rückwärtsgangzugkraft und -geschwindigkeit zu ermöglichen.

Diese Aufgabe wird erfindungsgemäß durch die Merkmale des Patentanspruchs 1 gelöst. Weitere Vorteile und vorteilhafte Ausgestaltungen gehen aus den Unteransprüchen hervor.

Demnach wird ein erfindungsgemäßes Mehrstufengetriebe in Planetenbauweise vorgeschlagen, welches einen Antrieb und einen Abtrieb aufweist, welche in einem Gehäuse angeordnet sind. Des weiteren sind zumindest vier Planetensätze, im Folgenden als erster, zweiter, dritter und vierter Planetensatz bezeichnet, mindestens acht drehbare Wellen - im Folgenden als erste, zweite, dritte, vierte, fünfte, sechste, siebte und achte Welle bezeichnet - sowie zumindest sechs Schaltelemente, umfassend Bremsen und Kupplungen, vorgesehen, deren selektives Eingreifen verschiedene Übersetzungsverhältnisse zwischen dem Antrieb und dem Abtrieb bewirkt, so dass sechs Vorwärtsgänge und drei Rückwärtsgänge realisierbar sind.

Erfindungsgemäß ist bei dem Mehrstufengetriebe vorgesehen, dass die erste Welle ständig mit dem Antrieb An und dem Steg des ersten Planetensatzes verbunden ist, wobei die zweite Welle ständig mit dem Abtrieb, dem Steg des dritten Planetensatzes und dem Steg des vierten Planetensatzes verbunden ist. Des weiteren ist die dritte Welle ständig mit dem Hohlrad des zweiten Planetensatzes und dem Sonnenrad des ersten Planetensatzes verbunden, wobei die vierte Welle ständig mit dem Hohlrad des dritten Planetensatzes und dem Sonnenrad des vierten Planetensatzes verbunden ist. Die fünfte Welle ist ständig mit dem Hohlrad des vierten Planetensatzes verbunden, wobei die sechste Welle ständig mit dem Sonnenrad des zweiten Planetensatzes und dem Hohlrad des ersten Planetensatzes verbunden ist, die siebte Welle ständig mit dem Sonnenrad des dritten Planetensatzes verbunden ist und wobei die achte Welle ständig mit dem Steg des zweiten Planetensatzes verbunden ist.

Hierbei sind die dritte, die vierte und die fünfte Welle jeweils über eine Bremse an ein Gehäuse des Getriebes ankoppelbar. Des weiteren ist vorgesehen, dass eine Kupplung die vierte Welle mit der achten Welle lösbar verbindet, dass eine weitere Kupplung die sechste Welle mit der siebten Welle lösbar verbindet und dass eine weitere Kupplung die siebte Welle mit der achten Welle lösbar verbindet.

Durch die erfindungsgemäße Ausgestaltung des Mehrstufengetriebes ergeben sich insbesondere für Nutzfahrzeuge und Arbeitsmaschinen geeignete Übersetzungen. Darüber hinaus wird mit dem erfindungsgemäßen Mehrstufengetriebe durch eine geringe Anzahl an Schaltelementen, vorzugsweise drei Bremsen und drei Kupplungen, der Bauaufwand erheblich reduziert. In vorteilhafter Weise ist es mit dem erfindungsgemäßen Mehrstufengetriebe möglich, ein Anfahren mit einem hydrodynamischen Wandler, einer hydrodynamischen Kupplung, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Vorwärtsgang und im ersten Rückwärtsgang betätigt wird.

Ferner ergibt sich bei dem erfindungsgemäßen Mehrstufengetriebe ein guter Wirkungsgrad in den Hauptfahrgängen bezüglich der Schlepp- und Verzahnungsverluste.

Des weiteren liegen geringe Momente in den Schaltelementen und in den Planetensätzen des Mehrstufengetriebes vor, wodurch der Verschleiß bei dem Mehrstufengetriebe in vorteilhafter Weise reduziert wird. Ferner wird durch die geringen Momente eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetensätzen vor.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird.

Die Erfindung wird im Folgenden anhand der Zeichnungen beispielhaft näher erläutert.
In diesen stellen dar:
- Figur 1: eine schematische Ansicht einer bevorzugten Ausführungs- form eines erfindungsgemäßen Mehrstufengetriebes und
- Figur 2: ein beispielhaftes Schaltschema für das erfindungsgemäße Mehrstufengetriebe gemäß Figur 1.

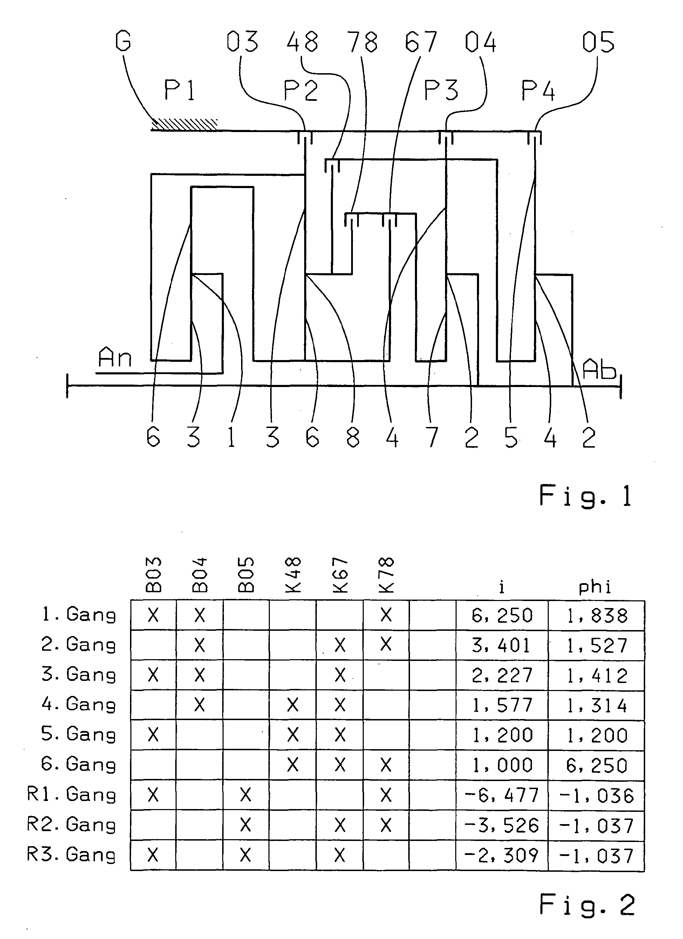

In Figur 1 ist ein erfindungsgemäßes Mehrstufengetriebe mit einer Antriebswelle An und einer Abtriebswelle Ab dargestellt, welche in einem Gehäuse G angeordnet sind. Es sind vier Planetensätze P1, P2, P3, P4 vorgesehen, welche vorzugsweise als Minus-Planetensätze ausgebildet sind und in der Reihenfolge P1, P2, P3, P4 in axialer Richtung angeordnet sind.

Wie aus Figur 1 ersichtlich, sind lediglich sechs Schaltelemente, nämlich drei Bremsen 03, 04, 05 und drei Kupplungen 48, 67 und 78 vorgesehen. Mit diesen Schaltelementen ist ein selektives Schalten von vorzugsweise sechs Vorwärtsgängen und drei Rückwärtsgängen realisierbar. Das erfindungsgemäße Mehrstufengetriebe weist insgesamt acht drehbare Wellen auf, nämlich die Wellen 1, 2, 3, 4, 5, 6, 7 und 8.

Erfindungsgemäß ist bei dem Mehrstufengetriebe gemäß Figur 1 vorgesehen, dass die Welle 1 ständig mit dem Antrieb An und dem Steg des ersten Planetensatzes P1 verbunden ist, wobei die Welle 2 ständig mit dem Abtrieb Ab, dem Steg des dritten Planetensatzes P3 und dem Steg des vierten Planetensatzes P4 verbunden ist, die Welle 3 ständig mit dem Hohlrad des zweiten Planetensatzes P2 und dem Sonnenrad des ersten Planetensatzes P1 verbunden ist und wobei die Welle 4 ständig mit dem Hohlrad des dritten Planetensatzes P3 und dem Sonnenrad des vierten Planetensatzes P4 verbunden ist. Des weiteren ist die Welle 5 ständig mit dem Hohlrad des vierten Planetensatzes P4 verbunden, wobei die Welle 6 ständig mit dem Sonnenrad des zweiten Planetensatzes P2 und dem Hohlrad des ersten Planetensatzes P1 verbunden ist, die Welle 7 ständig mit dem Sonnenrad des dritten Planetensatzes P3 verbunden ist und wobei die Welle 8 ständig mit dem Steg des zweiten Planetensatzes P2 verbunden ist.

Wie aus Figur 1 ersichtlich, ist die Welle 3 über die Bremse 03 an ein Gehäuse G des Getriebes ankoppelbar; die Welle 4 ist über die Bremse 04 ebenfalls an ein Gehäuse G des Getriebes ankoppelbar, wobei die Welle 5 über die Bremse 05 an ein Gehäuse G des Getriebes ankoppelbar ist. Des weiteren ist erfindungsgemäß vorgesehen, dass die Kupplung 48 die Welle 4 mit der Welle 8 lösbar verbindet, dass die Kupplung 67 die Welle 6 mit der Welle 7 lösbar verbindet und dass die Kupplung 78 die Welle 7 mit der Welle 8 lösbar verbindet.

Hierbei können die Kupplungen 78 und 67 axial betrachtet zwischen dem zweiten Planetensatz P2 und dem dritten Planetensatz P3 angeordnet sein; in vorteilhafter Weise können die Kupplungen 78 und 67 als Lamellenkupplungen einen gemeinsamen Außenlamellenträger aufweisen.

Des weiteren ist die Kupplung 48 ist axial betrachtet zwischen dem zweiten Planetensatz P2 und dem dritten Planetensatz P3 angeordnet, wobei deren Außenlamellenträger radial betrachtet oberhalb der Kupplungen 78 und 67 geführt sein kann.

Die räumliche Anordnung der Schaltelemente kann beliebig sein und wird nur durch die Abmessungen und die äußere Formgebung begrenzt, so dass die tatsächliche Anordnung der Elemente je nach konstruktiver Anforderung von der gezeigten Anordnung deutlich abweichen kann.

In Figur 2 ist ein beispielhaftes Schaltschema des erfindungsgemäßen Mehrstufengetriebes gemäß Figur 1 dargestellt. Für jeden Gang werden drei Schaltelemente geschlossen. Dem Schaltschema können die jeweiligen Übersetzungen i der einzelnen Gangstufen und die daraus zu bestimmenden Stufensprünge phi beispielhaft entnommen werden. Des weiteren kann dem Schaltschema entnommen werden, dass bei sequentieller Schaltweise Doppelschaltungen bzw. Gruppenschaltungen vermieden werden, da zwei benachbarte Gangstufen zwei Schaltelemente gemeinsam benutzen. Bei dem gezeigten Schaltschema ist der sechste Gang als Direktgang ausgebildet.

Gemäß der Erfindung können sich auch bei gleichem Getriebeschema je nach Schaltlogik unterschiedliche Gangsprünge ergeben, so dass eine anwendungs- bzw. fahrzeugspezifische Variation ermöglicht wird.

Der erste Vorwärtsgang ergibt sich durch Schließen der Bremse 04, der Bremse 03 und der Kupplung 78, der zweite Gang durch Schließen der Bremse 04, der Kupplung 67 und der Kupplung 78 und der dritte Gang ergibt sich durch Schließen der Bremse 04, der Kupplung 67 und der Bremse 03. Ferner ergibt sich der vierte Gang durch Schließen der Kupplung 48, der Bremse 04 und der Kupplung 67, der fünfte Gang durch Schließen der Kupplungen 48 und 67 und der Bremse 03 und der sechste Gang ergibt sich durch Schließen der Kupplungen 48, 67 und 78. Wie aus dem Schaltschema ersichtlich, ergibt sich der erste Rückwärtsgang durch Schließen der Bremsen 03 und 05 und der Kupplung 78, der zweite Rückwärtsgang durch Schließen der Bremse 05 und der Kupplungen 67 und 78 und der dritte Rückwärtsgang ergibt sich durch Schließen der Bremsen 03 und 05 und der Kupplung 67.

Es ist erfindungsgemäß möglich, an jeder geeigneten Stelle des Mehrstufengetriebes zusätzliche Freiläufe vorzusehen, beispielsweise zwischen einer Welle und einem Gehäuse des Getriebes oder um zwei Wellen gegebenenfalls zu verbinden.

Auf der Antriebsseite oder auf der Abtriebsseite können erfindungsgemäß ein Achsdifferential und/oder ein Verteilerdifferential angeordnet werden.

Im Rahmen einer vorteilhaften Weiterbildung kann die Antriebswelle durch ein Kupplungselement von einem Antriebs-Motor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle ständig mit der Kurbelwelle des Motors verbunden ist.

Das erfindungsgemäße Mehrstufengetriebe ermöglicht außerdem die Anordnung eines Torsionsschwingungsdämpfers zwischen Motor und Getriebe.

Im Rahmen einer weiteren, nicht dargestellten Ausführungsform der Erfindung kann auf jeder Welle, bevorzugt auf der Antriebswelle oder der Abtriebswelle, eine verschleißfreie Bremse, wie z.B. ein hydraulischer oder elektrischer Retarder oder dergleichen, angeordnet sein, was insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle oder der Abtriebswelle, ein Nebenabtrieb vorgesehen sein.

Die eingesetzten Schaltelemente können als lastschaltende Kupplungen oder Bremsen ausgebildet sein. Insbesondere können kraftschlüssige Kupplungen oder Bremsen, wie z.B. Lamellenkupplungen, Bandbremsen und/oder Konuskupplungen, verwendet werden. Des weiteren können als Schaltelemente auch formschlüssige Bremsen und/oder Kupplungen, wie z.B. Synchronisierungen oder Klauenkupplungen eingesetzt werden. Gemäß der Erfindung können die Schaltelemente hydraulisch, pneumatisch oder elektromotorisch betätigbar sein.

Ein weiterer Vorteil des hier vorgestellten Mehrstufengetriebes besteht darin, dass auf jeder Welle als Generator und/oder als zusätzliche Antriebsmaschine eine elektrische Maschine anbringbar ist.

Selbstverständlich fällt auch jede konstruktive Ausbildung, insbesondere jede räumliche Anordnung der Planetensätze und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Welle
- 2: Welle
- 3: Welle
- 4: Welle
- 5: Welle
- 6: Welle
- 7: Welle
- 8: Welle
- 03: Bremse
- 04: Bremse
- 05: Bremse
- 48: Kupplung
- 67: Kupplung
- 78: Kupplung

- P1: Planetensatz
- P2: Planetensatz
- P3: Planetensatz
- P4: Planetensatz
- An: Antrieb
- Ab: Abtrieb
- i: Übersetzung
- phi: Stufensprung
- G: Gehäuse

## Patentansprüche

1. Mehrstufengetriebe in Planetenbauweise, insbesondere Automatgetriebe für ein Kraftfahrzeug, umfassend einen Antrieb (An) und einen Abtrieb (Ab), welche in einem Gehäuse (G) angeordnet sind, vier Planetensätze (P1, P2, P3, P4), mindestens acht drehbare Wellen (1, 2, 3, 4, 5, 6, 7, 8) sowie mindestens sechs Schaltelemente (03, 04, 05, 48, 67, 78), umfassend Bremsen (03, 04, 05) und Kupplungen (48, 67, 78), deren selektives Eingreifen verschiedene Übersetzungsverhältnisse zwischen dem Antrieb (An) und dem Abtrieb (Ab) bewirkt, so dass sechs Vorwärtsgänge und drei Rückwärtsgänge realisierbar sind, wobei eine erste Welle (1) ständig mit dem Antrieb (An) und dem Steg des ersten Planetensatzes (P1) verbunden ist, eine zweite Welle (2) ständig mit dem Abtrieb (Ab), dem Steg des dritten Planetensatzes (P3) und dem Steg des vierten Planetensatzes (P4) verbunden ist, eine dritte Welle (3) ständig mit dem Hohlrad des zweiten Planetensatzes (P2) und dem Sonnenrad des ersten Planetensatzes (P1) verbunden ist, eine vierte Welle (4) ständig mit dem Hohlrad des dritten Planetensatzes (P3) und dem Sonnenrad des vierten Planetensatzes (P4) verbunden ist, eine fünfte Welle (5) ständig mit dem Hohlrad des vierten Planetensatzes (P4) verbunden ist, eine sechste Welle (6) ständig mit dem Sonnenrad des zweiten Planetensatzes (P2) und dem Hohlrad des ersten Planetensatzes (P1) verbunden ist, eine siebte Welle (7) ständig mit dem Sonnenrad des dritten Planetensatzes (P3) verbunden ist, eine achte Welle (8) ständig mit dem Steg des zweiten Planetensatzes (P2) verbunden ist, wobei die dritte, vierte und fünfte Welle (3, 4, 5) jeweils über eine Bremse (03, 04, 05) an dem Gehäuse (G) des Getriebes ankoppelbar sind, und wobei eine erste Kupplung (48) die vierte Welle (4) mit der achten Welle (8) lösbar verbindet, eine zweite Kupplung (67) die sechste Welle (6) mit der siebten Welle (7) lösbar verbindet und wobei eine dritte Kupplung (78) die siebte Welle (7) mit der achten Welle (8) lösbar verbindet.

2. Mehrstufengetriebe nach Anspruch 1, **dadurch gekennzeichnet, dass** die Planetensätze (P1, P2, P3, P4) in der Reihenfolge (P1, P2, P3, P4) in axialer Richtung angeordnet sind.

3. Mehrstufengetriebe nach einem der vorangehenden Ansprüche, **dadurch gekennzeichnet, dass** die Planetensätze (P1, P2, P3, P4) als Minus-Planetensätze ausgebildet sind.

4. Mehrstufengetriebe nach einem der vorangehenden Ansprüche, **dadurch gekennzeichnet, dass** die zweite und die dritte Kupplung (67, 78) axial betrachtet zwischen dem zweiten Planetensatz (P2) und dem dritten Planetensatz (P3) angeordnet sind.

5. Mehrstufengetriebe nach einem der vorangehenden Ansprüche, **dadurch gekennzeichnet, dass** die zweite und die dritte Kupplung (67, 78) als Lamellenkupplungen einen gemeinsamen Außenlamellenträger aufweisen.

6. Mehrstufengetriebe nach einem der vorangehenden Ansprüche, **dadurch gekennzeichnet, dass** die erste Kupplung (48) axial betrachtet zwischen dem zweiten Planetensatz (P2) und dem dritten Planetensatz (P3) angeordnet ist.

7. Mehrstufengetriebe nach Anspruch 6, **dadurch gekennzeichnet, dass** der Außenlamellenträger der ersten Kupplung (48) radial betrachtet oberhalb der zweiten und der dritten Kupplung (67, 78) geführt ist.

8. Mehrstufengetriebe nach einem der vorangehenden Ansprüche, **dadurch gekennzeichnet, dass** sechs Vorwärtsgänge realisierbar sind, wobei sich der erste Gang durch Schließen einer ersten Bremse (03), der dritten Kupplung (78) und einer zweiten Bremse (04), der zweite Gang durch Schließen der zweiten Bremse (04), der zweiten Kupplung (67) und der dritten Kupplung (78), der dritte Gang durch Schließen der zweiten Bremse (04), der zweiten Kupplung (67) und der ersten Bremse (03), der vierte Gang durch Schließen der ersten Kupplung (48), der zweiten Bremse (04) und der zweiten Kupplung (67), der fünfte Gang durch Schließen der ersten und zweiten Kupplung (48, 67) und der ersten Bremse (03) und der sechste Gang durch Schließen der ersten , zweiten und dritten Kupplung (48, 67, 78) ergibt.

9. Mehrstufengetriebe nach einem der vorangehenden Ansprüche, **dadurch gekennzeichnet, dass** drei Rückwärtsgänge realisierbar sind, wobei sich der erste Rückwärtsgang durch Schließen der ersten Bremse (03) und einer dritten Bremse (05) und der dritten Kupplung (78), der zweite Rückwärtsgang durch Schließen der dritten Bremse (05), der zweiten Kupplung (67) und der dritten Kupplung (78) und der dritte Rückwärtsgang durch Schließen der ersten und dritten Bremse (03, 05) und der zweiten Kupplung (67) ergibt.

10. Mehrstufengetriebe nach einem der vorangehenden Ansprüche, **dadurch gekennzeichnet, dass**aufjederWelle(1,2,3,4, 5,6,7,8) ein Freilauf zum Gehäuse (G) oder zu einer anderen Welle (1, 2, 3, 4, 5, 6, 7, 8) anordbar ist.

11. Mehrstufengetriebe nach einem der vorangehenden Ansprüche, **dadurch gekennzeichnet, dass** Antrieb und Abtrieb auf der gleichen Seite des Gehäuses vorgesehen sind.

12. Mehrstufengetriebe nach einem der vorangehenden Ansprüche, **dadurch gekennzeichnet, dass** ein Achs- und/oder ein Verteilerdifferential auf der Antriebsseite oder der Abtriebsseite angeordnet ist.

13. Mehrstufengetriebe nach einem der vorangehenden Ansprüche, **dadurch gekennzeichnet, dass** der Antrieb (An) durch ein Kupplungselement von einem Antriebs-Motor trennbar ist.

14. Mehrstufengetriebe nach Anspruch 13, **dadurch gekennzeichnet, dass** als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung vorgesehen ist.

15. Mehrstufengetriebe nach einem der vorangehenden Ansprüche, **dadurch gekennzeichnet, dass** in Kraftflussrichtung hinter dem Getriebe ein externes Anfahrelement, insbesondere nach Anspruch 13 oder 14, anordbar ist, wobei der Antrieb (An) fest mit der Kurbelwelle des Motors verbunden ist.

16. Mehrstufengetriebe nach einem der vorangehenden Ansprüche, **dadurch gekennzeichnet, dass** das Anfahren mittels eines Schaltelements (03, 78) des Getriebes erfolgt, wobei der Antrieb (An) ständig mit der Kurbelwelle des Motors verbunden ist.

17. Mehrstufengetriebe nach einem der vorangehenden Ansprüche, **dadurch gekennzeichnet, dass** zwischen Motor und Getriebe ein Torsionsschwingungsdämpfer anordbar ist.

18. Mehrstufengetriebe nach einem der vorangehenden Ansprüche, **dadurch gekennzeichnet, dass** auf jeder Welle (1, 2, 3, 4, 5, 6, 7, 8) eine verschleißfreie Bremse anordbar ist.

19. Mehrstufengetriebe nach einem der vorangehenden Ansprüche, **dadurch gekennzeichnet, dass** zum Antrieb von zusätzlichen Aggregaten auf jeder Welle (1, 2, 3, 4, 5, 6, 7, 8) ein Nebenabtrieb anordbar ist.

20. Mehrstufengetriebe nach einem der vorangehenden Ansprüche, **dadurch gekennzeichnet, dass** die Schaltelemente als lastschaltende Kupplungen oder Bremsen ausgebildet sind.

21. Mehrstufengetriebe nach Anspruch 20, **dadurch gekennzeichnet, dass** Lamellenkupplungen, Bandbremsen und/oder Konuskupplungen einsetzbar sind.

22. Mehrstufengetriebe nach einem der Ansprüche 1 bis 19, **dadurch gekennzeichnet, dass** als Schaltelemente formschlüssige Bremsen und/oder Kupplungen vorgesehen sind.

23. Mehrstufengetriebe nach einem der vorangehenden Ansprüche, **dadurch gekennzeichnet, dass** auf jeder Welle (1, 2, 3, 4, 5, 6, 7, 8) als Generator und/oder als zusätzliche Antriebsmaschine eine elektrische Maschine anbringbar ist.

## Claims

1. Multi-stage gearbox of planetary design, in particular an automatic gearbox for a motor vehicle, comprising an input (An) and an output (Ab), which are arranged in a housing (G), four planetary gear sets (P1, P2, P3, P4), at least eight rotatable shafts (1, 2, 3, 4, 5, 6, 7, 8), and at least six shifting elements (03, 04, 05, 48, 67, 78) comprising brakes (03, 04, 05) and clutches (48, 67, 78), the selective engagement of which brings about different transmission ratios between the input (An) and the output (Ab) such that six forward gears and three reverse gears can be implemented, a first shaft (1) being continuously connected to the input (An) and the planet carrier of the first planetary gear set (P1), a second shaft (2) being continuously connected to the output (Ab), the planet carrier of the third planetary gear set (P3) and the planet carrier of the fourth planetary gear set (P4), a third shaft (3) being continuously connected to the ring gear of the second planetary gear set (P2) and the sun gear of the first planetary gear set (P1), a fourth shaft (4) being continuously connected to the ring gear of the third planetary gear set (P3) and the sun gear of the fourth planetary gear set (P4), a fifth shaft (5) being continuously connected to the ring gear of the fourth planetary gear set (P4), a sixth shaft (6) being continuously connected to the sun gear of the second planetary gear set (P2) and the ring gear of the first planetary gear set (P1), a seventh shaft (7) being continuously connected to the sun gear of the third planetary gear set (P3), an eighth shaft (8) being continuously connected to the planet carrier of the second planetary gear set (P2), it being possible to couple the third, fourth and fifth shafts (3, 4, 5) to the housing (G) of the gearbox via respective brakes (03, 04, 05), and a first clutch (48) detachably connecting the fourth shaft (4) to the eighth shaft (8), a second clutch (67) detachably connecting the sixth shaft (6) to the seventh shaft (7), and a third clutch (78) detachably connecting the seventh shaft (7) to the eighth shaft (8).

2. Multi-stage gearbox according to Claim 1, **characterized in that** the planetary gear sets (P1, P2, P3, P4) are arranged in the sequence (P1, P2, P3, P4) in an axial direction.

3. Multi-stage gearbox according to one of the preceding claims, **characterized in that** the planetary gear sets (P1, P2, P3, P4) are designed as minus planetary gear sets.

4. Multi-stage gearbox according to one of the preceding claims, **characterized in that** the second and the third clutch (67, 78) are arranged between the second planetary gear set (P2) and the third planetary gear set (P3), when viewed axially.

5. Multi-stage gearbox according to one of the preceding claims, **characterized in that** the second and the third clutch (67, 78) are multi-disc clutches and have a common outer disc carrier.

6. Multi-stage gearbox according to one of the preceding claims, **characterized in that** the first clutch (48) is arranged between the second planetary gear set (P2) and the third planetary gear set (P3), when viewed axially.

7. Multi-stage gearbox according to Claim 6, **characterized in that** the outer disc carrier of the first clutch (48) is located above the second and the third clutch (67, 78), when viewed radially.

8. Multi-stage gearbox according to one of the preceding claims, **characterized in that** six forward gears can be implemented, the first gear being obtained by engagement of a first brake (03), the third clutch (78) and a second brake (04), the second gear being obtained by engagement of the second brake (04), the second clutch (67) and the third clutch (78), the third gear being obtained by engagement of the second brake (04), the second clutch (67) and the first brake (03), the fourth gear being obtained by engagement of the first clutch (48), the second brake (04) and the second clutch (67), the fifth gear being obtained by engagement of the first and the second clutch (48, 67) and the first brake (03), and the sixth gear being obtained by engagement of the first, the second and the third clutch (48, 67, 78).

9. Multi-stage gearbox according to one of the preceding claims, **characterized in that** three reverse gears can be implemented, the first reverse gear being obtained by engagement of the first brake (03), a third brake (05) and the third clutch (78), the second reverse gear being obtained by engagement of the third brake (05), the second clutch (67) and the third clutch (78), and the third reverse gear being obtained by engagement of the first and the third brake (03, 05) and the second clutch (67).

10. Multi-stage gearbox according to one of the preceding claims, **characterized in that** a one way clutch can be arranged on each shaft (1, 2, 3, 4, 5, 6, 7, 8) between said shaft and the housing (G) or another shaft (1, 2, 3, 4, 5, 6, 7, 8).

11. Multi-stage gearbox according to one of the preceding claims, **characterized in that** the input and the output are provided on the same side of the housing.

12. Multi-stage gearbox according to one of the preceding claims, **characterized in that** an axle differential and/or a transfer case is/are arranged on the input side or the output side.

13. Multi-stage gearbox according to one of the preceding claims, **characterized in that** the input (An) can be separated from a drive engine by a coupling element.

14. Multi-stage gearbox according to Claim 13, **characterized in that** a hydrodynamic converter, a hydraulic clutch, a dry starting clutch, a wet starting clutch, a magnetic powder clutch or a centrifugal clutch is provided as the coupling element.

15. Multi-stage gearbox according to one of the preceding claims, **characterized in that** an external starting element, in particular according to Claim 13 or 14, can be arranged downstream of the gearbox in a power flow direction, and the input (An) is rigidly connected to the crankshaft of the engine.

16. Multi-stage gearbox according to one of the preceding claims, **characterized in that** starting is accomplished by means of a shifting element (03, 78) of the gearbox, and the input (An) is continuously connected to the crankshaft of the engine.

17. Multi-stage gearbox according to one of the preceding claims, **characterized in that** a torsional vibration damper can be arranged between the engine and the gearbox.

18. Multi-stage gearbox according to one of the preceding claims, **characterized in that** a wear-free brake can be arranged on each shaft (1, 2, 3, 4, 5, 6, 7, 8).

19. Multi-stage gearbox according to one of the preceding claims, **characterized in that** an auxiliary drive can be arranged on each shaft (1, 2, 3, 4, 5, 6, 7, 8) in order to drive additional units.

20. Multi-stage gearbox according to one of the preceding claims, **characterized in that** the shifting elements are designed as power-shift clutches or brakes.

21. Multi-stage gearbox according to Claim 20, **characterized in that** multi-disc clutches, band brakes and/or cone clutches can be used.

22. Multi-stage gearbox according to one of Claims 1 to 19, **characterized in that** positive brakes and/or clutches are provided as shifting elements.

23. Multi-stage gearbox according to one of the preceding claims, **characterized in that** an electric machine can be mounted on each shaft (1, 2, 3, 4, 5, 6, 7, 8) as a generator and/or as an additional drive machine.

## Revendications

1. Transmission à plusieurs étages de construction planétaire, en particulier transmission automatique pour un véhicule automobile, comprenant un entraînement (An) et une prise de force (Ab), qui sont disposés dans un boîtier (G), quatre trains planétaires (P1, P2, P3, P4), au moins huit arbres rotatifs (1, 2, 3, 4, 5, 6, 7, 8) ainsi qu'au moins six éléments de commutation (03, 04, 05, 48, 67, 78), comprenant des freins (03, 04, 05) et des embrayages (46, 67, 78), dont l'engagement sélectif provoque différents rapports de démultiplication entre l'entraînement (An) et la prise de force (Ab), de sorte que six rapports de marche avant et trois rapports de marche arrière puissent être réalisés, un premier arbre (1) étant connecté en permanence à l'entraînement (An) et au porte-satellites du premier train planétaire (P1), un deuxième arbre (2) étant connecté en permanence à la prise de force (Ab), au porte-satellites du troisième train planétaire (P3) et au porte-satellites du quatrième train planétaire (P4), un troisième arbre (3) étant connecté en permanence à la couronne du deuxième train planétaire (P2) et à la roue solaire du premier train planétaire (P1), un quatrième arbre (4) étant connecté en permanence à la couronne du troisième train planétaire (P3) et à la roue solaire du quatrième train planétaire (P4), un cinquième arbre (5) étant connecté en permanence à la couronne du quatrième train planétaire (P4), un sixième arbre (6) étant connecté en permanence à la roue solaire du deuxième train planétaire (P2) et à la couronne du premier train planétaire (P1), un septième arbre (7) étant connecté en permanence à la roue solaire du troisième train planétaire (P3), un huitième arbre (8) étant connecté en permanence au porte-satellites du deuxième train planétaire (P2), les troisième, quatrième et cinquième arbres (3, 4, 5) pouvant être accouplés à chaque fois par le biais d'un frein (03, 04, 05) au boîtier (G) de la transmission, et un premier embrayage (48) reliant de manière desserrable le quatrième arbre (4) au huitième arbre (8), un deuxième embrayage (67) reliant de manière desserrable le sixième arbre (6) au septième arbre (7), et un troisième embrayage (78) reliant de manière desserrable le septième arbre (7) au huitième arbre (8).

2. Transmission à plusieurs étages selon la revendication 1, **caractérisée en ce que** les trains planétaires (P1, P2, P3, P4) sont disposés dans la séquence (P1, P2, P3, P4) dans la direction axiale.

3. Transmission à plusieurs étages selon l'une quelconque des revendications précédentes, **caractérisée en ce que** les trains planétaires (P1, P2, P3, P4) sont réalisés sous forme de trains planétaires négatifs.

4. Transmission à plusieurs étages selon l'une quelconque des revendications précédentes, **caractérisée en ce que** le deuxième et le troisième embrayage (67, 78), considérés axialement, sont disposés entre le deuxième train planétaire (P2) et le troisième train planétaire (P3).

5. Transmission à plusieurs étages selon l'une quelconque des revendications précédentes, **caractérisée en ce que** le deuxième et le troisième embrayage (67, 78) présentent en tant qu'embrayages à disques un support de disques extérieur commun.

6. Transmission à plusieurs étages selon l'une quelconque des revendications précédentes, **caractérisée en ce que** le premier embrayage (48), considéré axialement, est disposé entre le deuxième train planétaire (P2) et le troisième train planétaire (P3).

7. Transmission à plusieurs étages selon la revendication 6, **caractérisée en ce que** le support de disques extérieur du premier embrayage (48), considéré radialement, est guidé au-dessus du deuxième et du troisième embrayage (67, 78).

8. Transmission à plusieurs étages selon l'une quelconque des revendications précédentes, **caractérisée en ce que** six rapports de marche avant peuvent être réalisés, le premier rapport étant obtenu par fermeture d'un premier frein (03), du troisième embrayage (78) et d'un deuxième frein (04), le deuxième rapport étant obtenu par fermeture du deuxième frein (04), du deuxième embrayage (67) et du troisième embrayage (78), le troisième rapport étant obtenu par fermeture du deuxième frein (04), du deuxième embrayage (67) et du premier frein (03), le quatrième rapport étant obtenu par fermeture du premier embrayage (48), du deuxième frein (04) et du deuxième embrayage (67), le cinquième rapport étant obtenu par fermeture du premier et du deuxième embrayage (48, 67) et du premier frein (03), et le sixième rapport étant obtenu par fermeture du premier, du deuxième et du troisième embrayage (48, 67, 78).

9. Transmission à plusieurs étages selon l'une quelconque des revendications précédentes, **caractérisée en ce que** trois rapports de marche arrière peuvent être réalisés, le premier rapport de marche arrière étant obtenu par fermeture du premier frein (03) et d'un troisième frein (05) et du troisième embrayage (78), le deuxième rapport de marche arrière étant obtenu par fermeture du troisième frein (05), du deuxième embrayage (67) et du troisième embrayage (78), et le troisième rapport de marche arrière étant obtenu par fermeture du premier et du troisième frein (03, 05) et du deuxième embrayage (67).

10. Transmission à plusieurs étages selon l'une quelconque des revendications précédentes, **caractérisée en ce que** sur chaque arbre (1, 2, 3, 4, 5, 6, 7, 8) peut être disposée une roue libre par rapport au boîtier (G) ou à un autre arbre (1, 2, 3, 4, 5, 6, 7, 8).

11. Transmission à plusieurs étages selon l'une quelconque des revendications précédentes, **caractérisée en ce que** l'entraînement et la prise de force sont prévus sur le même côté du boîtier.

12. Transmission à plusieurs étages selon l'une quelconque des revendications précédentes, **caractérisée en ce qu'**un différentiel d'essieu et/ou intermédiaire est disposé du côté de l'entraînement ou de la prise de force.

13. Transmission à plusieurs étages selon l'une quelconque des revendications précédentes, **caractérisée en ce que** l'entraînement (An) peut être séparé d'un moteur d'entraînement par un élément d'embrayage.

14. Transmission à plusieurs étages selon la revendication 13, **caractérisée en ce que** l'on prévoit comme élément d'embrayage un convertisseur hydrodynamique, un embrayage hydraulique, un embrayage de démarrage sec, un embrayage de démarrage humide, un embrayage à poudre magnétique ou un embrayage à force centrifuge.

15. Transmission à plusieurs étages selon l'une quelconque des revendications précédentes, **caractérisée en ce que**, dans la direction du flux de forces derrière la transmission, on peut disposer un élément de démarrage externe, notamment selon la revendication 13 ou 14, l'entraînement (An) étant relié fixement au vilebrequin du moteur.

16. Transmission à plusieurs étages selon l'une quelconque des revendications précédentes, **caractérisée en ce que** le démarrage a lieu au moyen d'un élément de commutation (03, 78) de la transmission, l'entraînement (An) étant connecté de manière permanente au vilebrequin du moteur.

17. Transmission à plusieurs étages selon l'une quelconque des revendications précédentes, **caractérisée en ce que** l'on peut disposer un amortisseur d'oscillations de torsion entre le moteur et la transmission.

18. Transmission à plusieurs étages selon l'une quelconque des revendications précédentes, **caractérisée en ce que** l'on peut disposer sur chaque arbre (1, 2, 3, 4, 5, 6, 7, 8) un frein sans usure.

19. Transmission à plusieurs étages selon l'une quelconque des revendications précédentes, **caractérisée en ce que** sur chaque arbre (1, 2, 3, 4, 5, 6, 7, 8) peut être disposée une prise de force auxiliaire pour l'entraînement d'unités supplémentaires.

20. Transmission à plusieurs étages selon l'une quelconque des revendications précédentes, **caractérisée en ce que** les éléments de commutation sont réalisés sous forme de freins ou d'embrayages à commutation de charge.

21. Transmission à plusieurs étages selon la revendication 20, **caractérisée en ce que** l'on peut utiliser des embrayages à disques, des freins à ruban et/ou des embrayages coniques.

22. Transmission à plusieurs étages selon l'une quelconque des revendications 1 à 19, **caractérisée en ce que** l'on prévoit comme éléments de commutation des freins et/ou des embrayages à engagement par correspondance géométrique.

23. Transmission à plusieurs étages selon l'une quelconque des revendications précédentes, **caractérisée en ce que** sur chaque arbre (1, 2, 3, 4, 5, 6, 7, 8) peut être montée une machine électrique en tant que générateur et/ou machine d'entraînement supplémentaire.
